# EUROPÄISCHE PATENTSCHRIFT

(11) **EP 1 078 783 B1**
(45) Veröffentlichungstag und Bekanntmachung des Hinweises auf die Patenterteilung: **15.09.2004**
(21) Anmeldenummer: 00112740.6
(22) Anmeldetag: 16.06.2000
(51) Int. Cl.: B60G 15/06, B60G 11/16, F16F 1/12, B60G 13/00, B60G 15/07

(54) **Federbein für ein Kraftfahrzeug mit einer Lagerung für eine Schraubenfeder**
Suspension strut for a motor vehicle with a support for a coil spring
Jambe de suspension pour un véhicule automobile avec un support pour un ressort hélicoidal

(30) Priorität: 20.08.1999 DE 19939515
(43) Veröffentlichungstag der Anmeldung: 28.02.2001
(73) Patentinhaber: Dr.Ing. h.c.F. Porsche Aktiengesellschaft, 70435 Stuttgart (DE)
(72) Erfinder: Germano, Francesco, 74321 Bietigheim-Bissingen (DE)

(56) Entgegenhaltungen:
- DE-A- 19 641 728
- DE-A- 19 748 634
- US-A- 5 470 049

## Beschreibung

Die Erfindung bezieht sich auf ein Federbein eines Kraftfahrzeuges mit einer Lagerung für eine Schraubenfeder nach dem Oberbegriff des Patentanspruchs 1.

Aus der gattungsbildenden EP 0 564 824 B1 ist eine Lagerung für ein Federbein eines Kraftfahrzeugs am Fahrzeugaufbau bekannt, die einen eine elastische Auflage haltenden Federteller aufweist, an dem sich eine Schraubenfeder abstützt, wobei die elastische Auflage eine der Steigung der Feder entsprechend geneigt verlaufende Federabstützfläche und eine im Abstützbereich der Feder gleiche Elastizität besitzt. Zur Erreichung einer gleichen Elastizität im oberen Abstützbereich der Feder ist ein Distanzelement vorgesehen, das mit Ausprägungen in das Federelement eingreift und die wirksame federnde Fläche jeweils einen gleichbleibenden Abstand über den Umfang der Feder aufweist.

Aufgabe der Erfindung ist es, ein Federbein mit einer verbesserten Lagerung für eine Feder zu schaffen, mit der bei Federungsvorgängen eine Knickung der Schraubenfeder vermieden wird. Ferner sollen Kerbbelastungen am Federteller unterbunden werden. Darüber hinaus sollen verschieden lange Federn in einfacher Weise einsetzbar sein.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, daß durch die Ausbildung und korrespondierende Anordnung des Stützelements mit der Federauflage sichergestellt wird, daß einerseits keine Knickung der Feder bei dynamischen Vorgängen eintritt und andererseits sich die Federauflage nicht im Stützelement verdrehen kann und hieraus resultierend keine Veränderung der Stützposition der Feder zum Federteller erfolgt. Hierzu ist die Feder mit ihrem freien Ende jeweils über die im Stützelement gehaltene elastische Federauflage einerseits am Fahrzeugaufbau und andererseits am Dämpferrohr abgestützt. Die Stützelemente sind mit den Federauflagen über Verdrillfixierungen miteinander in Eingriff und die Federauflage ist in diesem Fixierbereich federnd ausgebildet.

Eine formschlüssige Verbindung zwischen den beiden Teilen, wie Stützelement und Federauflage erfolgt über zwei beabstandet angeordnete Zähne im Stützelement, die in eine korrespondierende Ausnehmung in der Federauflage eingreifen. Zwischen den beiden Zähnen besteht ein Freiraum und die seitlichen Begrenzungsflanken der Ausnehmung schließen sich an äußere Flanken der Zähne formschlüssig an. Hierdurch wird eine Verdrehbarkeit gegeneinander verhindert.

Damit trotz der Verdrillfixierung eine gleiche elastische Wirkung über die ganze Windung erfolgen kann, endet das untere freie Ende der Feder unmittelbar neben der Begrenzungsfläche und die Federwindung oberhalb und im Bereich der Ausnehmung kommt von der Führungsrille der Federauflage frei. Die Federauflage weist hierzu eine Auflagefläche entsprechend des Winkels der Federwindung auf, die zu einer Abstützfläche am Stützelement bis zur Verdrillfixierung parallel und über den Gesamtumfang mit einer annähernd gleichen Steifigkeit bzw. mit einer gleichen Dicke ausgeführt ist.

Damit sich die elastische Federauflage bei dynamischen Belastungszuständen nicht verquetschen läßt und somit die Steifigkeit nachteilig verändert wird, besteht das untere Stützelement nach einer speziellen, aus einem topfförmigen Teil mit einem hochgestellten Rand. Die Federauflage wird hierdurch vom Rand teilweise umgriffen, nur im Bereich der Zähne wird der Rand unterbrochen, damit in diesem Bereich keine zusätzliche Reibung entsteht und eine ungehinderte Federwirkung eintreten kann. Der obere Lagerteller nimmt das Stützelement und die Federauflage auf und ist ebenfalls topfförmig ausgebildet und umgreift das Stützelement sowie die Federauflage mit einem Abstand.

Die elastischen Federauflagen bestehen aus einem Gummimaterial oder einem ähnlichen Material und das Stützelement besteht aus einem Kunststoff oder einem Leichtmetall und der Federteller kann aus Aluminium oder Stahl bestehen.

Damit der Abstand zwischen der aufbauseitigen Abstützung und dem unteren Federteller variierbar ist, ist dieser auf das Dämpferrohr aufsteckbar und verdrehbar in der Weise, daß sich der Federteller in verschiedenen Höhen am Dämpferbein einstellen läßt. Der Federteller weist hierzu in seiner Innenumfangsfläche eine Vielzahl von Ausnehmungen auf, die über den Umfang verteilt angeordnet sind, wobei wenigstens drei Ausnehmungen eine gleiche Tiefe aufweisen und die weiteren Ausnehmungen eine andere Tiefe besitzen.

Ausführungsbeispiele der Erfindung sind in den Zeichnungen dargestellt und werden im folgenden näher beschrieben.

Es zeigen
- Fig. 1: eine Ansicht auf ein Federbein mit einer oberen und unteren Lagerung seiner Feder,
- Fig. 2: eine schaubildliche Darstellung der oberen und unteren Lagerung,
- Fig. 3: eine Vorderansicht einer Federauflage,
- Fig. 4: eine Draufsicht auf die Federauflage gemäß Fig. 3,
- Fig. 5: einen Schnitt nach der Linie V-V der Fig. 4,
- Fig. 6: eine schaubildliche Darstellung der Federauflage,
- Fig. 7: eine Draufsicht auf ein Stützelement,
- Fig. 8: eine Vorderansicht auf das Stützelement gemäß Fig. 7,
- Fig. 9: eine weitere Vorderansicht auf das Stützelement,
- Fig. 10: einen Schnitt nach der Linie X-X der Fig. 7,
- Fig. 11: eine schaubildliche Darstellung des Stützelements,
- Fig. 12: eine schaubildliche Darstellung eines Stützelements einer unteren Lagerung,
- Fig. 12a: eine Vorderansicht auf das Stützelement gemäß Fig. 12,
- Fig. 13: eine Draufsicht auf einen verstellbaren Federteller der unteren Lagerung,
- Fig. 14: eine schaubildliche Darstellung des Federtellers,
- Fig. 14a: eine schaubildliche Darstellung des Federtellers mit neun nutförmigen Ausnehmungen,
- Fig. 15: einen Schnitt durch den Federteller gemäß der Linie XV-XV der Fig. 13 und
- Fig. 16: eine Ansicht auf ein Dämpferrohr mit Lagerungen für den verstellbaren Federteller gemäß Fig. 14 und 14a.

Ein Federbein 1 besteht im wesentlichen aus einem Stoßdämpfer 2, der von einer Feder 3 umgeben ist. Eine obere Lagerung L1 ist mit einem Fahrzeugaufbau verbunden und am unteren Ende des Stoßdämpfers 2 ist bei einer Hinterachse beispielsweise ein elastisches Lager und bei einer Vorderachse beispielsweise eine Gabel 5 zur Verbindung mit einem Radführungslenker vorgesehen. Die Feder 3 ist am oberen Ende des Federbeines 1 in einer elastischen Federauflage 6 gehalten, die in einem Stützelement 7 gelagert ist. Diese Lagereinheit 6, 7 ist in einem topfförmigen Lagerteller 8 angeordnet, der über Schrauben 9 mit dem Fahrzeugaufbau verbindbar ist.

Das untere Ende der Feder 3 ist wie auch das obere Ende in einer Federauflage 6a abgestützt, die in einem Stützelement 7a gehalten wird, das sich auf einem Federteller 10; 10a abstützt. Dieser ist mit dem Dämpferrohr 11 entweder fest oder höhenverstellbar verbunden.

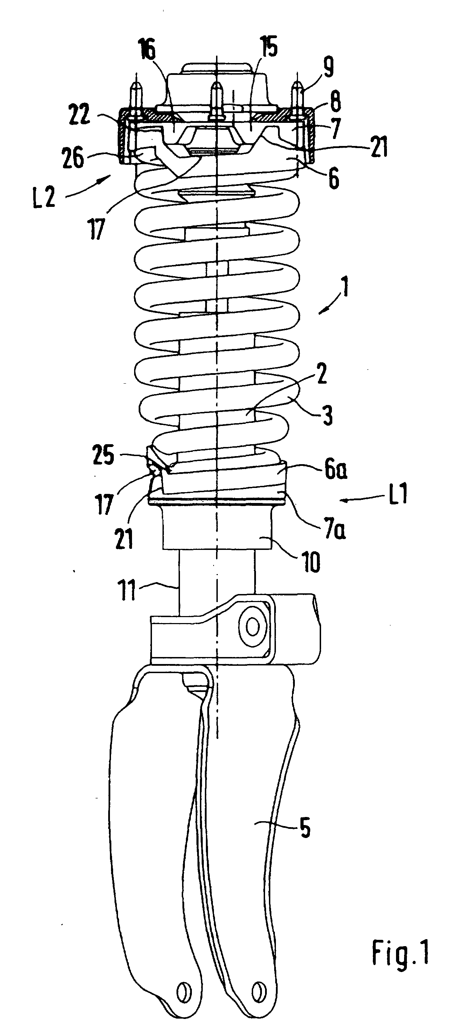

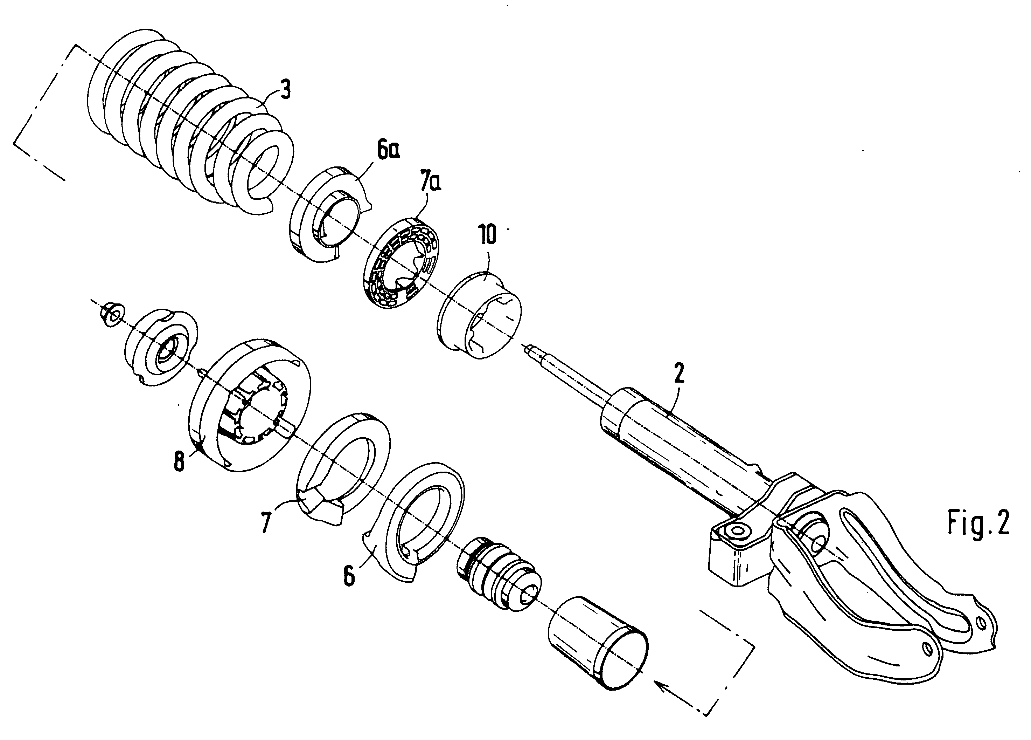

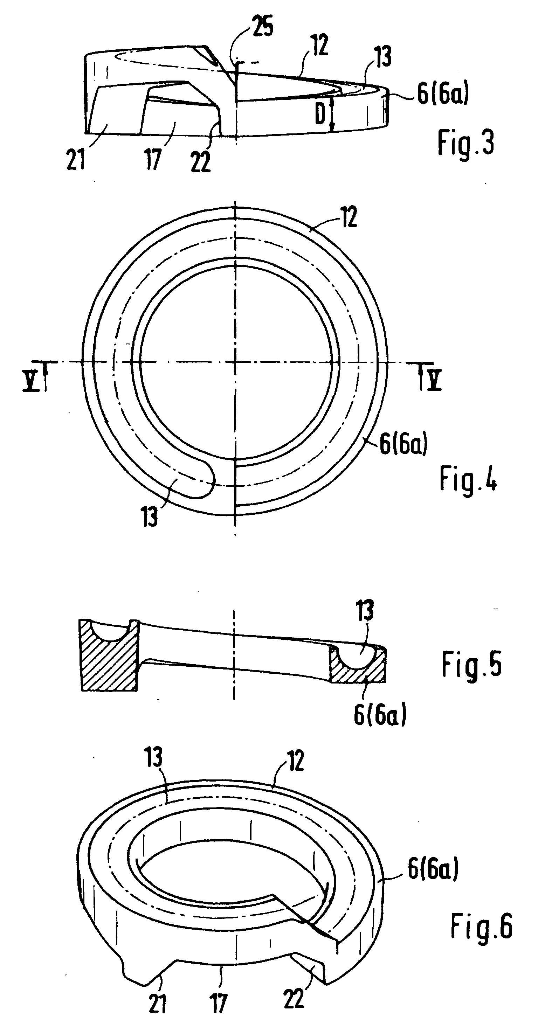

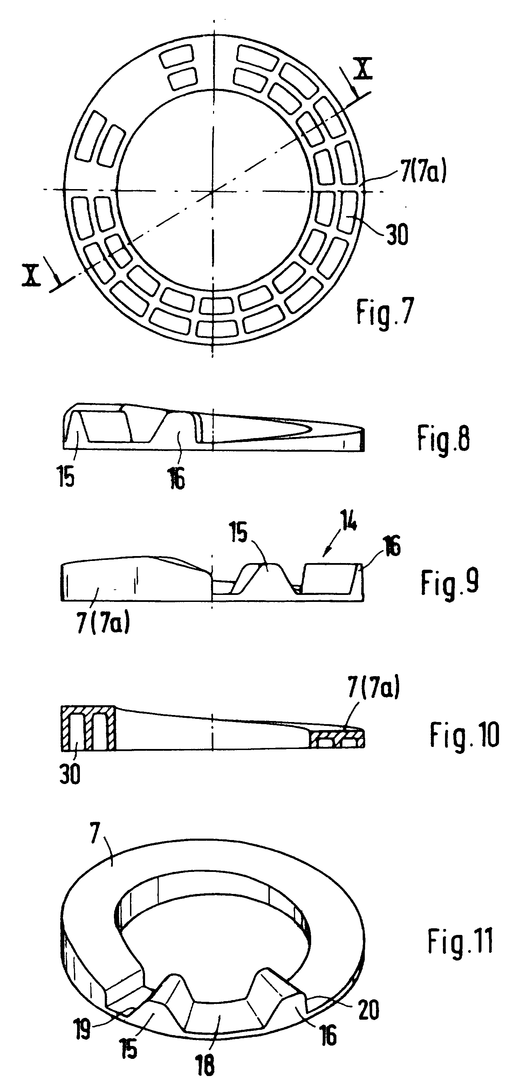

Die Federauflagen 6 und 6a der oberen und unteren Lagerung L1 und L2 sowie die Stützelemente 7 und 7a sind in der Form etwa gleich ausgeführt aber unterschiedlich dimensioniert. Es sind in den Zeichnungen der Fig. 3 bis 11 jeweils nur eine Federauflage und ein Stützelement dargestellt, wobei in den Fig. 1 und 2 beide Elemente gezeigt sind.

Die Federauflage 6, 6a gemäß der Fig. 3 bis 6 weist eine der Steigung der Feder 3 entsprechend geneigt verlaufende Feder-Abstützfläche 12 mit einer Führungsrille 13 auf. Mit der Federauflage 6, 6a ist über eine Verdrillfixierung 14 ein Stützelement 7, 7a verbunden. Diese Fixierung 14 umfaßt mindestens zwei Zähne 15, 16, welche in eine entsprechende Ausnehmung 17 der Federauflage 6, 6a eingreifen. Die Zähne 15, 16 weisen zwischen sich einen Freiraum 18 auf und äußere Zahnflanken 19, 20 liegen formschlüssig an seitlichen Begrenzungsflächen 21, 22 der Ausnehmung 17 in der Federauflage 6, 6a an.

Wie die Fig. 1 und 2 näher zeigen, sind die Federauflagen 6, 6a einander zugekehrt und in den Stützelementen 7, 7a gehalten, welche sich am Federteller 8 bzw. am Federteller 10; 10a abstützen.

Die freien Enden 25, 26 der Feder 3 enden jeweils nahe der Begrenzungsfläche 22 der Ausnehmung 17 und die Federwindung kommt oberhalb und im Bereich der Ausnehmung 17 frei von der Federauflage 6, 6a. Die Ausnehmung 17 bewirkt eine annähernd gleiche Dicke D des Federelements 6, 6a über den gesamten Windungsumfang der Feder 7 und einen Federungseffekt.

Das Stützelement 7a der unteren Lagerung L1 ist gegenüber der oberen Lagerung L2 topfförmig ausgeführt. Es weist einen hochgestellten Rand 27 auf, der rundherum vorgesehen sein kann oder im Bereich der Zähne 15, 16 unterbrochen ist. Dieses ist zur ungehinderten Einfederung der Federauflage 6a in diesem Bereich erforderlich. Auch wird hierdurch eine nachteilige Reibung ausgeschaltet.

Das Stützelement 7, 7a besteht vorzugsweise aus einem starren Kunststoffteil bzw. aus einem Formspritzteil, welches Ausnehmungen 30 aufweist, in der Weise, daß sich gleiche Wandstärken im gesamten Teil ergeben. Die Federauflagen 6, 6a bestehen vorzugsweise aus einem Gummiwerkstoff oder einem ähnlichen Material.

Damit verschieden lange Federn 3 einsetzbar bzw. Toleranzen ausgleichbar sind, ist das Stützelement 7, 7a auswechselbar und der Boden ist mit unterschiedlichen Dicken, wie beispielsweise 3 mm, 6 mm, 5 mm und 10 mm versehen.

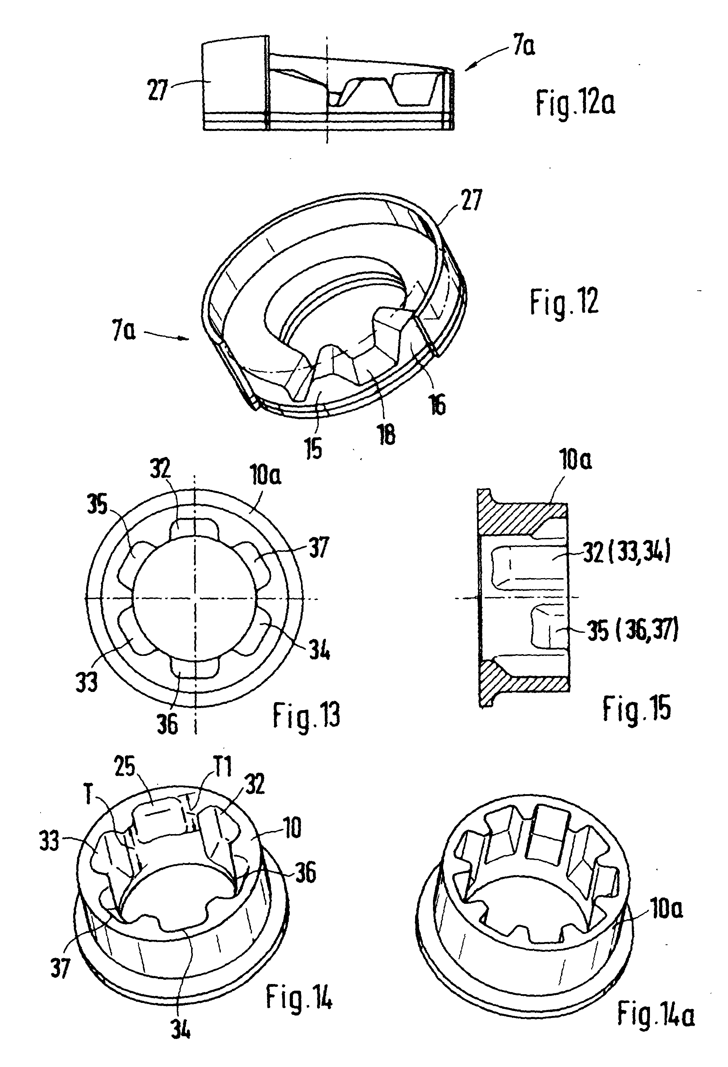

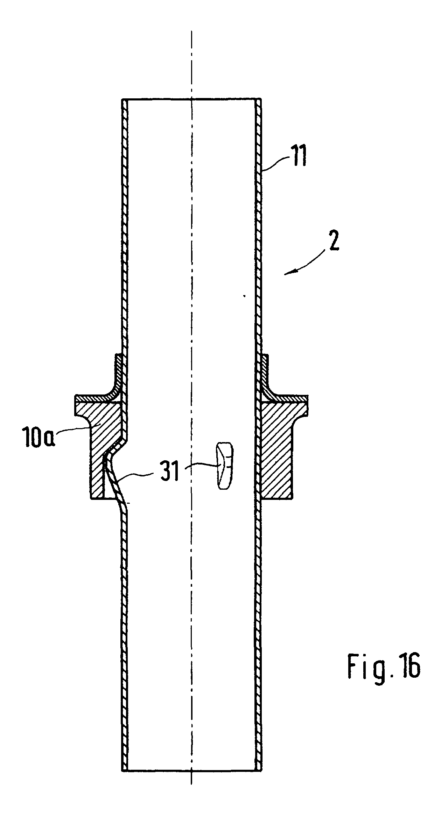

Der Federteller 10 der unteren Lagerung L1 gemäß der Fig. 13, 14 und 15 kann fest mit dem Dämpferrohr 11 verbunden sein oder nach einer weiteren Ausführung kann der Federteller 10a auf mehreren vorragenden Lagerungen 31 des Dämpferrohrs 11 abgestützt werden. Zur Erzielung verschiedener Höheneinstellungen des Federtellers 10a weist dieser innenseitig nutförmige Ausnehmungen 32, 33 und 34 auf, die eine größere Tiefe T besitzen als die weiteren Ausnehmungen 35, 36, 37 mit der Tiefe T1. Der Federteller 10a kann statt der sechs Ausnehmungen auch neun Ausnehmungen aufweisen (gem. Fig. 14a), wobei jeweils drei Ausnehmungen eine gleiche Tiefe aufweisen. Die Ausnehmungen gleicher Tiefe sind über den Umfang des Federtellers gleichmäßig verteilt.

Die Ausnehmungen bestehen wie dargestellt aus in der Innenwandfläche des Federtellers 10a vorgesehenen Nuten, sie können nach einer weiteren Ausführung auch aus schlitzförmig durchgehenden, nach außen hin offenen Aussparungen bestehen.

Die Lagerungen 31 am Dämpferrohr 11 können aus angeschweißten vorragenden Ansätzen oder aus Ausdrückungen 31 des Dämpferrohres 11 bestehen, wie Fig. 16 zeigt.

## Patentansprüche

1. Federbein für ein Kraftfahrzeug mit einer Lagerung für eine Schraubenfeder (3) mit einer von einem Stützelement (7, 7a) aufgenommenen und in diesem verrastbaren elastischen Federauflage (6, 6a), an der sich die Schraubenfeder (3) abstützt, wobei diese eine der Steigung der Feder (3) entsprechend geneigt verlaufende Feder-Abstützfläche und eine im Abstützbereich der Feder (3) gleiche Elastizität besitzt und die Feder (3) mit ihren freien Enden (25, 26) jeweils über eine im Stützelement (7, 7a) gehaltene elastische Federauflage (6, 6a) einerseits am Fahrzeugaufbau und andererseits am Dämpferrohr (11) abgestützt ist, und wobei die Stützelemente (7, 7a) mit den korrespondierenden Federauflagen (6, 6a) über Verdrillfixierungen (14) in Eingriff stehen, und die Federauflagen (6, 6a) im Bereich dieser Verdrillfixierungen (14) federnd ausgebildet sind, **dadurch gekennzeichnet, dass** die Stützelemente (7, 7a) jeweils geschlossen kreisförmig ausgeführt sind und die Verdrillfixierung (14) am Stützelement (7, 7a) aus zwei zueinander beabstandeten Zähnen (15, 16) besteht, die in eine gegenüberliegende Ausnehmung (17) der Federauflage (6, 6a) eingreifen, und sich zwischen den Zähnen (15, 16) ein Freiraum (18) innerhalb der Ausnehmung (17) bildet und die Ausnehmung (17) seitliche Begrenzungsflächen (21, 22) aufweist, an denen die äußeren Flanken (19, 20) der Zähne (15,16) formschlüssig anliegen.

2. Federbein nach Anspruch 1, **dadurch gekennzeichnet, daß** das untere freie Ende (25) der Feder (3) unmittelbar neben der Begrenzungsfläche (21) endet und die Federwindung oberhalb und im Bereich der Ausnehmung (17) von einer Führungsrille (13) in der Federauflage (6, 6a) freikommt.

3. Federbein nach den Ansprüchen 1 oder 2, **dadurch gekennzeichnet, daß** die Federauflage (6, 6a) eine Auflagefläche entsprechend des Winkels der Federwindung aufweist, die zu einer Auflagefläche am Stützelement (7, 7a) bis zur Verdrillfixierung (14) etwa parallel verläuft und die Federauflage (6, 6a) über den Gesamtumfang mit einer annähernd gleichen Steifigkeit bzw. Dicke D ausgeführt ist.

4. Federbein nach den Ansprüchen 1, 2 oder 3, **dadurch gekennzeichnet, daß** das Stützelement (7a) einer unteren Lagerung (L1) der Feder (3) aus einem topfförmigen Teil mit einem hochgestellten Rand (27) besteht, der im Bereich der Zähne (15, 16) und der Ausnehmung (17) unterbrochen ist und der restliche Umfangsbereich der Federauflage (6a) vom Rand (26) umgriffen wird.

5. Federbein nach einem oder mehreren der vorhergehenden Ansprüche, **dadurch gekennzeichnet, daß** das Stützelement (7, 7a) aus einem starren Kunststoffmaterial und die elastische Federauflage (6, 6a) aus einem Gummimaterial besteht.

6. Federbein nach Anspruch 1, **dadurch gekennzeichnet, daß** ein das Stützelement (7a) und die Federauflage (6a) tragender Federteller (10a) mit dem Dämpferrohr (11) des Federbeines (1) lösbar verbunden ist und der Federteller (10a) sich am Dämpferrohr (11) über Lagerungen (31) abstützt und der Federteller (10a) über den Innenumfang verteilt mindestens drei Ausnehmungen (32, 33 und 34) von gleicher Tiefe (T) aufweist und abwechselnd über den Innenumfang verteilt weitere Ausnehmungen (35, 36 und 37) mit einer anderen Tiefe (T1) im Federteller (10a) vorgesehen sind.

7. Federbein nach Anspruch 6, **dadurch gekennzeichnet, daß** jeweils gleich tiefe Ausnehmungen (32, 33, 34 und 35, 36, 37) jeweils um 120° versetzt zueinander angeordnet sind.

8. Federbein nach den Ansprüchen 6 oder 7, **dadurch gekennzeichnet, daß** die Ausnehmungen (33 bis 37) nutförmig oder als nach außen hin offene durchgehende schlitzförmige Aussparungen ausgeführt sind.

9. Federbein nach den Ansprüchen 6 oder 7, **dadurch gekennzeichnet, daß** die Lagerungen (31) am Dämpferrohr (11) aus vorragenden Ausdrückungen oder Ansätzen bestehen.

## Claims

1. A suspension strut for a motor vehicle with a mounting for a helical spring (3), comprising a resilient spring support (6, 6a) which is held by a supporting member (7, 7a) and is lockable therein and against which the helical spring (3) is supported, wherein the spring support (6, 6a) has a spring supporting surface inclined in accordance with the pitch of the spring (3) and has uniform elasticity in the supporting region of the spring (3), and the spring (3) is supported by its free ends (25, 26) on the vehicle body at one end and on the shock absorber tube (11) at the other end via a respective resilient spring support (6, 6a) held in the respective supporting member (7, 7a), and wherein the supporting members (7, 7a) engage with the corresponding spring supports (6, 6a) by means of twist fixings (14), and the spring supports (6, 6a) are resiliently formed in the region of these twist fixings (14), **characterised in that** the supporting members (7, 7a) are each in the form of a closed circle, and the twist fixing (14) on the supporting member (7, 7a) comprises two mutually spaced teeth (15, 16) which engage in an opposing recess (17) in the spring support (6, 6a), and a gap (18) is formed between the teeth (15, 16) inside the recess (17), and the recess (17) has lateral boundary surfaces (21, 22) against which the outer flanks (19, 20) of the teeth (15, 16) positively rest.

2. A suspension strut according to claim 1, **characterised in that** the lower free end (25) of the spring (3) ends directly adjacent to the boundary surface (21), and the spring turn comes free of a guide groove (13) in the spring support (6, 6a) above and in the region of the recess (17).

3. A suspension strut according to claim 1 or 2, **characterised in that** the spring support (6, 6a) has a supporting surface corresponding to the angle of the spring turn and extending substantially parallel to a supporting surface on the supporting member (7, 7a) as far as the twist fixing (14), and the spring support (6, 6a) is constructed with approximately the same rigidity or thickness D over its entire circumference.

4. A suspension strut according to claim 1, 2 or 3, **characterised in that** the supporting member (7a) of a lower mounting (L1) of the spring (3) comprises a pot-shaped part with a raised edge (27) which is interrupted in the region of the teeth (15, 16) and the recess (17), and the edge (27) engages round the remainder of the circumferential region of the spring support (6a).

5. A suspension strut according to one or more of the preceding claims, **characterised in that** the supporting member (7, 7a) is made of a rigid plastics material and the resilient spring support (6, 6a) is made of a rubber material.

6. A suspension strut according to claim 1, **characterised in that** a spring collar (10a), carrying the supporting member (7a) and the spring support (6a), is detachably connected to the shock absorber tube (11) of the suspension strut (1), and the spring collar (10a) is supported on the shock absorber tube (11) by mountings (31), and the spring collar (10a) has at least three recesses (32, 33 and 34) of uniform depth (T) distributed over its inner circumference, and further recesses (35, 36 and 37) of a different depth (T1) are alternately distributed over the inner circumference of the spring collar (10a).

7. A suspension strut according to claim 6, **characterised in that** respective recesses (32, 33, 34 and 35, 36, 37) of uniform depth are each arranged angularly displaced by 120°.

8. A suspension strut according to claim 6 or 7, **characterised in that** the recesses (33 to 37) are in the form of grooves or are formed as outwardly open, slot-type through openings.

9. A suspension strut according to claim 6 or 7, **characterised in that** the mountings (31) on the shock absorber tube (11) comprise projecting attachments or pressed-out parts.

## Revendications

1. Jambe de force à ressort pour un véhicule automobile comportant un support pour un ressort hélicoïdal (3) avec un appui de ressort (6, 6a) élastique reçu dans un élément de soutien (7, 7a) et pouvant s'accrocher dans celui-ci, sur lequel prend appui le ressort hélicoïdal (3), ce dernier présentant une surface de soutien de ressort s'étendant inclinée suivant la pente du ressort (3), et une même élasticité dans la zone de soutien du ressort (3), et le ressort étant soutenu, par chacune de ses extrémités libres (25, 26), par un appui de ressort (6, 6a) élastique maintenu dans l'élément de soutien (7, 7a), d'une part sur la carrosserie du véhicule et d'autre part sur le tube d'amortisseur (11), et les éléments de soutien (7, 7a) étant en engagement avec les appuis de ressort (6, 6a) correspondants par des fixations torsadées (14), et les appuis de ressort (6, 6a) étant réalisés élastiques dans la zone de ces fixations torsadées (14), **caractérisée en ce que** les éléments de soutien (7, 7a) sont réalisés chacun fermé en forme de cercle et la fixation torsadée (14) sur l'élément de soutien (7, 7a) est constituée de deux dents (15, 16) espacées l'une de l'autre qui s'engagent dans un évidement (17) opposé de l'appui de ressort (6, 6a), et entre les dents (15, 16), il se forme un espace libre (18) à l'intérieur de l'évidement (17), et l'évidement (17) présente des surfaces de délimitation (21, 22) latérales contre lesquelles s'appliquent par complémentarité de forme les flancs extérieurs (19, 20) des dents (15, 16).

2. Jambe de force à ressort selon la revendication 1, **caractérisée en ce que** l'extrémité libre inférieure (25) du ressort (3) se termine immédiatement à côté de la surface de délimitation (21) et les spires du ressort, au-dessus et dans la zone de l'évidement (17), se dégagent d'une gorge de guidage (13) de l'appui de ressort (6, 6a).

3. Jambe de force à ressort selon les revendications 1 ou 2, **caractérisée en ce que** l'appui de ressort (6, 6a) présente une surface d'appui correspondant à l'angle des spires du ressort, qui s'étend approximativement parallèlement à une surface d'appui de l'élément de soutien (7, 7a) jusqu'à la fixation torsadée (14), et l'appui de ressort (6, 6a) présente, sur tout son pourtour, une rigidité ou épaisseur (D) approximativement identique.

4. Jambe de force à ressort selon les revendications 1, 2 ou 3, **caractérisée en ce que** l'élément de soutien (7a) d'un support inférieur (L1) du ressort (3) est constitué d'un élément en forme de pot avec un bord relevé (27) qui est interrompu dans la zone des dents (15, 16) et de l'évidement (17) et la zone périphérique restante de l'appui de ressort (6a) est entourée par le bord (26).

5. Jambe de force à ressort selon une ou plusieurs des revendications précédentes, **caractérisée en ce que** l'élément de soutien (7, 7a) est constitué dans une matière plastique rigide et l'appui de support élastique (6, 6a) est constitué dans un matériau de caoutchouc.

6. Jambe de force à ressort selon la revendication 1, **caractérisée en ce qu'**un disque de ressort (10a) portant l'élément de soutien (7a) et l'appui de ressort (6a), est relié de manière séparable au tube d'amortisseur (11) de la jambe de force à ressort (1), et le disque de ressort (10a) prend appui sur le tube d'amortisseur (11) par des supports (31), et le disque de ressort (10a) comporte, répartis sur le pourtour intérieur, au moins trois évidements (32, 33, 34) de même profondeur (T), et d'autres évidements (35, 36, 37), répartis alternativement sur le pourtour intérieur, sont prévus dans le disque de ressort (10a) avec une autre profondeur (T1).

7. Jambe de force à ressort selon la revendication 6, **caractérisée en ce que** des évidements (32, 33, 34 et 35, 36, 37) de même profondeur sont disposés décalés de 120° les uns par rapport aux autres.

8. Jambe de force à ressort selon les revendications 6 ou 7, **caractérisée en ce que** les évidements (33 à 37) sont réalisés en forme de rainures ou comme découpes en forme de fentes traversantes, ouvertes vers l'extérieur.

9. Jambe de force à ressort selon les revendications 6 ou 7, **caractérisée en ce que** les supports (31) sur le tube d'amortisseur (11) sont constitués de bossages ou d'appendices saillants.
